Europäisches Patentamt

European Patent Office

Office européen des brevets

(19)

(11) Numéro de publication : **0 136 324**
**B1**

(12) FASCICULE DE BREVET EUROPÉEN

(45) Date de publication du fascicule du brevet :
25.05.88

(51) Int. Cl.⁴ : **E 04 F 13/18, E 04 F 13/00**

(21) Numéro de dépôt : 84900989.9

(22) Date de dépôt : 27.02.84

(86) Numéro de dépôt international :
PCT/FR 84/00040

(87) Numéro de publication internationale :
WO/8403320 (30.08.84 Gazette 84/21)

(54) ELEMENT DE REVETEMENT POUR FACADE EXTERIEURE ET SON APPLICATION.

(30) Priorité : 28.02.83 FR 8303228

(43) Date de publication de la demande :
10.04.85 Bulletin 85/15

(45) Mention de la délivrance du brevet :
25.05.88 Bulletin 88/21

(84) Etats contractants désignés :
AT CH DE FR GB LI NL SE

(56) Documents cités :
AT-B- 323 964
BE-A- 688 529
DE-A- 2 900 583
FR-A- 1 375 800
FR-A- 1 599 637
US-A- 4 327 528

(73) Titulaire : EFISOL
5 rue du Dôme
F-75116 Paris (FR)

(72) Inventeur : COUDERC, Pierre
2, rue du Général Cordonnier
F-92200 Neuilly sur Seine (FR)
Inventeur : CORBEL, Henri
12, rue du Val d'Or
F-44250 Saint Brevin (FR)

(74) Mandataire : Boillot, Marc
SOCIETE NATIONALE ELF AQUITAINE Division Propriété Industrielle Tour Elf
F-92078 Paris la Défense Cedex 45 (FR)

## Description

La présente invention concerne un élément de revêtement pour façade extérieure de bâtiment et son application à la réalisation d'une vêture pour ladite façade.

Les systèmes d'isolation thermique par l'extérieur sont des systèmes d'isolation pour lesquels l'isolant est disposé sur la façade externe des parois extérieures d'un bâtiment, à savoir murs extérieurs en béton ou en maçonnerie.

Parmi les systèmes d'isolation thermique par l'extérieur utilisés actuellement, les vêtures isolantes prennent une place de plus en plus importante.

On rappelle qu'une vêture isolante est un revêtement extérieur constitué par l'assemblage de complexes préfabriqués qui associent un isolant et une peau extérieure, lesdits complexes étant collés et/ou fixés mécaniquement sur la paroi support.

Dans le brevet autrichien AT-B-323.964 on décrit une vêture formée d'éléments complexes comportant chacun une âme en une matière isolante incorporée à une peau extérieure constituée par un clin consistant en un profilé en une matière thermoplastique. Sur sa face au contact du clin l'âme en matière isolante présente des parties en relief formant cales d'épaisseur pour ménager une lame d'air. Le clin consiste en une bande centrale plane bordée sur chaque côté latéral par un retour. L'un desdits retours est prolongé par une partie repliée dirigée vers l'intérieur du clin et sensiblement parallèle à la bande centrale de manière à former un crochet tandis que l'autre retour est prolongé par une aile dirigée vers l'extérieur du clin et sensiblement parallèle à la bande centrale. Ladite aile est pourvue d'orifices pour le passage de vis de fixation du clin au support et présente en outre à son extrémité une partie repliée disposée du côté de la·bande centrale et sensiblement parallèle à cette dernière, ladite partie repliée formant un crochet complémentaire de celui formé par la partie prolongeant l'autre retour du clin. La liaison entre deux clins adjacents est réalisée par engagement de la partie repliée prolongeant l'un des retours d'un clin à la partie repliée de manière complémentaire présente à l'extrémité de l'aile du clin adjacent.

Un premier inconvénient de ce type de vêture réside dans le fait que les moyens de liaison des clins ne permettent pas un verrouillage des clins entre eux, d'où un risque de décrochage en cas de sollicitation en dépression par le vent.

Un deuxième inconvénient provient du fait que des moyens d'évacuation des produits de condensation ne sont pas prévus et que, s'il y a bien aération entre l'âme isolante et le clin grâce à la lame d'air ménagée par les parties en relief, il n'en demeure pas moins vrai que la ventilation ou le renouvellement de l'air ne se fait pas de manière satisfaisante.

Un troisième inconvénient réside dans le fait que les têtes de fixation des clins au support ne sont pas protégées des intempéries.

Enfin un quatrième inconvénient provient de la difficulté de pose des éléments de vêture, par exemple, dans les équerres verticales en U d'arrêt des entourages d'ouvertures telles que fenêtres et portes.

Dans le brevet FR-A-1375800 on montre des éléments de revêtement en matière thermoplastique du type comportant une bande centrale bordée sur chaque côté latéral par un retour et des moyens de liaison consistant en une lame d'encliquetage associée à l'un des retours, perpendiculairement à la bande centrale de l'élément, et un organe d'encliquetage constitue par un profilé en caisson formant l'autre retour, ledit profilé étant muni d'une fente de guidage formant rainure et disposée parallèlement au plan de la bande centrale de l'élément. La lame d'encliquetage d'un élément peut être introduite de force dans la fente de guidage du caisson d'un élément adjacent, ce qui assure une liaison desdits éléments adjacents par verrouillage.

Le système de verrouillage choisi pour relier lesdits éléments de revêtement entre eux rend indispensable l'utilisation d'une pièce additionnelle en forme d'aile pour combler l'espace laissé entre les retours se faisant face de deux éléments adjacents quelconques en position verrouillée, ce qui entraîne une augmentation du coût du revêtement d'une part en matériel et d'autre part en temps de pose. En outre, de tels éléments ne sont pas pourvus d'orifices d'aération ce qui rend difficile le renouvellement de la lame d'air présente entre les éléments de revêtement et la paroi support.

La présente invention propose un élément de revêtement susceptible de constituer un clin pour une vêture pouvant être fixée sur la paroi support aussi bien horizontalement que verticalement, ledit élément de revêtement permettant de remédier aux inconvénients des éléments de revêtements précités.

Elle a également pour objet des moyens permettant la pose et la fixation des éléments de vêture sur des parois supports faisant un angle rentrant ou saillant avec d'autres parois supports, sans qu'apparaissent des discontinuités. De plus, des moyens selon l'invention permettent la liaison de parties de vêture au niveau des ouvertures lorsque la paroi support en comporte.

A cet effet, l'élément de revêtement suivant le FR-A-1 375 800 est réalisé par extrusion d'une matière thermoplastique, notamment polychlorure de vinyle, et comporte une bande centrale bordée sur chaque côté latéral par un retour, des moyens de liaison consistant en une lame d'encliquetage disposée sur l'un des retours et un organe d'encliquetage disposé sur l'autre retour, la lame d'encliquetage de l'élément de revêtement étant susceptible de coopérer avec l'organe d'encliquetage d'un élément de revêtement adjacent pour assurer une liaison desdits éléments par verrouillage, et des moyens permettant la fixation rigide de l'élément de revêtement à la paroi servant de support audit élément de revêtement. Selon l'invention, l'élément de revêtement se caractérise en ce que l'organe d'encliquetage consiste en une lame d'encliquetage ayant une forme complémentaire de la lame d'encliquetage placée sur l'autre retour, lesdites lames d'encliquetage étant dirigées vers l'extérieur des retours et étant dans des plans sensiblement parallèles, et en ce que sur chacun des retours est ménagée au moins une série d'orifices.

Suivant une forme de réalisation de l'élément de revêtement, l'un des retours comporte deux séries d'orifices ménagées de telle sorte que la lame d'encliquetage présente sur ce retour soit disposée entre les deux séries d'orifices. Dans cette forme de réalisation l'autre retour comporte, de préférence, une seule série d'orifices tandis que la lame d'encliquetage prévue sur ce retour est disposée entre la série d'orifices et le plan de la bande centrale de l'élément.

La vêture selon l'invention est du type comprenant une âme isolante, ou isolant, incorporée à un clin extérieur, ledit isolant étant en un matériau isolant rigide et comportant des plots en relief disposés en quinconce, répartis régulièrement sur toute la face extérieure dudit isolant et se caractérise en ce que lesdits plots sont de forme carrée, à bords arrondis, et sont disposés de manière à présenter une diagonale sensiblement parallèle à l'axe longitudinal de l'âme isolante et en ce que ledit clin extérieur est constitué par l'élément de revêtement suivant l'invention, tel que défini dans les revendications. De préférence, des canaux d'aération sont ménagés dans l'âme isolante et disposés de façon à pouvoir être au moins en partie en regard des orifices d'aération du clin et à permettre ainsi la communication entre lesdits orifices et l'espace entre les plots.

D'autres avantages et caractéristiques de l'invention telles que revendiquées apparaîtront à la lecture de la description ci-après d'un mode de réalisation de ladite invention donné à titre indicatif et se référant au dessin annexé sur lequel :

- la figure 1 est une vue en coupe verticale d'un élément de vêture selon l'invention ;

- la figure 2 est une vue fragmentaire en perspective de l'âme isolante de l'élément de vêture ;

- la figure 3 est une vue en coupe verticale d'une paroi support revêtue d'une vêture et comportant des lisses d'extrémités ainsi qu'une pièce intermédiaire de liaison ;

- la figure 4 est une vue en coupe, au niveau d'une ouverture ménagée dans la paroi support, des équerres d'encadrement ;

- la figure 5 est une vue en coupe d'un angle saillant de la paroi de support avec des moyens de raccordement de la vêture disposée sur les deux côtés de l'angle.

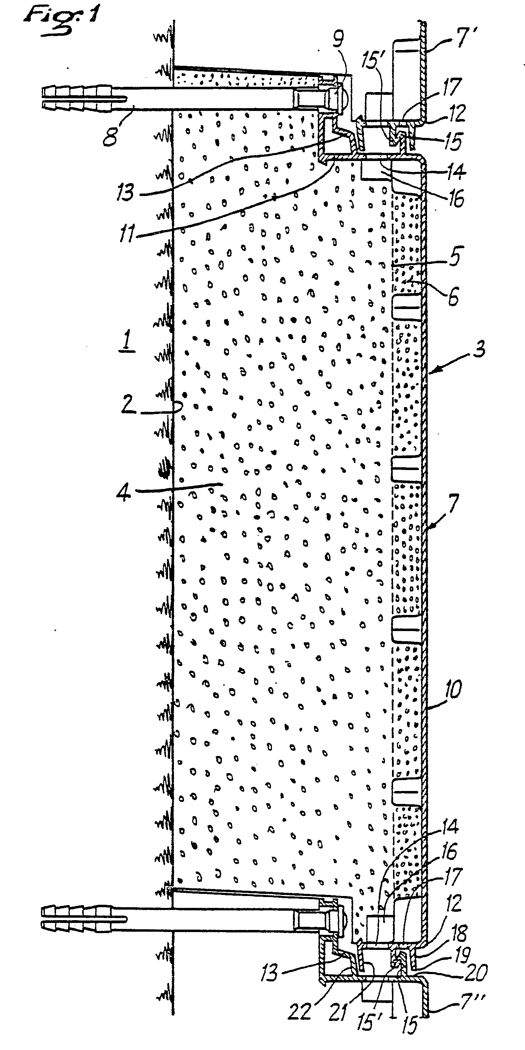

L'isolation thermique extérieure d'une paroi support 1 d'un immeuble est assurée par la fixation sur la façade extérieure 2 d'éléments de vêture analogues à l'élément de vêture désigné dans son ensemble par la référence 3, comme indiqué sur la figure 1.

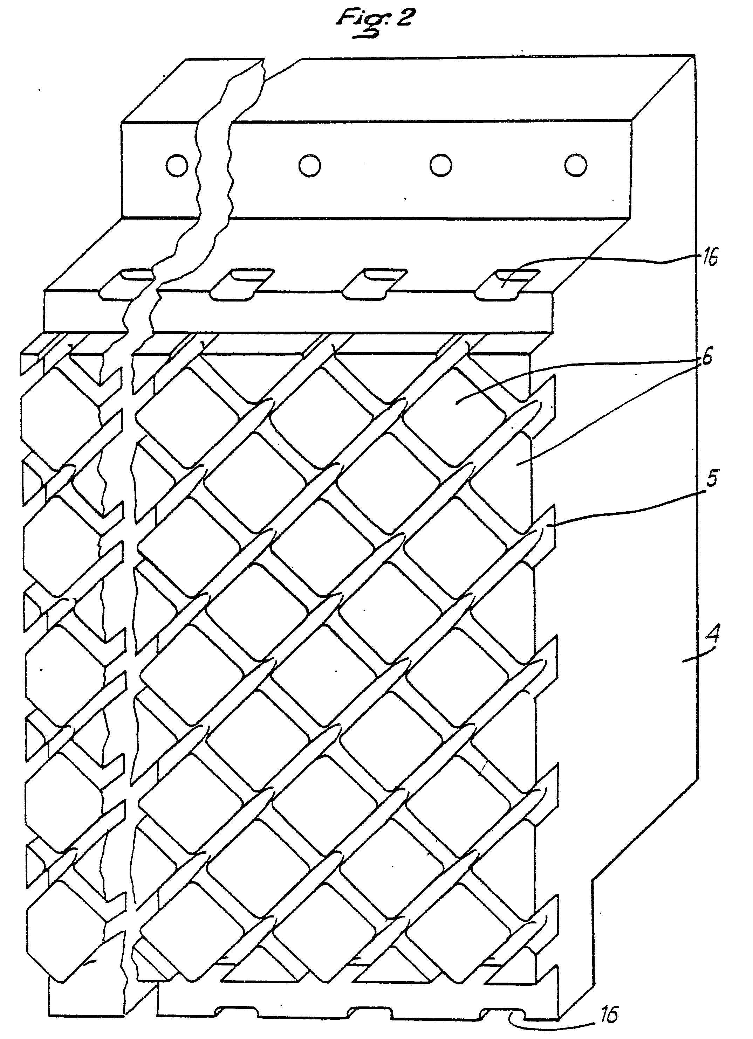

L'élément de vêture 3 comprend une âme isolante 4, ou isolant incorporé, en un matériau isolant rigide tel que du polystyrène expansé moulé présentant une densité comprise notamment entre 16 et 18 kg/m$^3$ et de préférence ignifugé, dont la face extérieure 5 est pourvue de plots 6 de forme carrée et disposés en quinconce (figure 2). L'épaisseur utile de l'isolant est par exemple comprise entre 60 et 120 mm. Les plots 6 sont à bord arrondi, d'épaisseur 10 mm et forment donc des cales d'épaisseur 10 mm.

L'isolant 4 est incorporé dans un élément de revêtement constituant un clin 7, l'ensemble isolant 4 et clin 7 étant fixé sur la paroi support 1 au moyen d'éléments de fixation complets comportant chacun une cheville 8 en nylon et un clou cranté 9. Dans une forme de réalisation préférée de l'invention, trois blocs d'isolant 4 sont incorporés dans chaque clin 7 présentant une largeur utile d'environ 300 mm pour une longueur de l'ordre de 3500 mm.

Le clin 7 est un profilé obtenu par extrusion, dans une extrudeuse non représentée, d'une matière thermoplastique telle que du polychlorure de vinyle, et se présente sous la forme d'une bande centrale 10 bordée de chaque côte latéral par un retour ou rive 11,12. Sur la figure 1, les rives 11 et 12 seront désignées respectivement comme étant supérieure et inférieure, mais il va de soi que lorsque l'élément de vêture 3 est disposé verticalement et non horizontalement, elles seront gauche et/ou droite suivant le sens où on les regarde. La rive supérieure 11 comprend une nervure de renfort 13, à travers laquelle sont introduits les éléments complets de fixation 8, 9, des orifices d'aération 14 et des moyens d'accrochage constitués par une lame d'encliquetage supérieure 15. Les orifices d'aération 14 sont oblongs, de dimensions 8 × 32 mm par exemple, et régulièrement répartis sur toute la longueur de la rive 11, d'entraxes égaux par exemple à 50 mm. Les orifices 14 sont ménagés sur la rive 11 de façon à venir en regard de canaux d'aération 16 ménagés dans l'isolant 4. Les canaux 16 sont de préférence plus grands que les orifices 14, par exemple de 20 × 40 mm, de manière à toujours avoir une communication entre les canaux 18 et les orifices 14 lors de l'incorporation dudit isolant 4 dans le clin 7. La rive inférieure 12 comprend également des orifices d'aération 14, en regard de canaux d'aération 16 de l'isolant, une lame d'encliquetage inférieure 15', et des orifices 17 d'évacuation des produits de condensation ou condensats. La lame 15' est disposée entre les orifices 14 et 17 de façon que, lors de l'encliquetage des lames 15 et 15' entre elles, les condensats soient empêchés de s'introduire dans les canaux d'aération 16 de l'isolant 4. Le guidage et l'évacuation des condensats vers l'extérieur sont assurés par une languette 18 venue d'extrusion et dont la hauteur est telle que, lorsque deux clins adjacents 7 et 7' ou 7" sont reliés entre eux, le bord libre inférieur 19 de la languette ne vienne

pas en appui sur la rive adjacente et ménage un passage 20 entre ledit bord 19 et ladite rive adjacente. Les condensats accumulés dans l'espace compris entre les lames 15,15' encliquetées, donc verrouillées, et la languette 18 s'écoulent à travers le passage 20 et ruissellent sur la face extérieure de la bande centrale 10. Venu également d'extrusion, un organe de butée 21 est prévu sur la rive inférieure 12, ledit organe 21 étant susceptible de venir en appui sur un organe d'arrêt 22 constitué par une partie de la nervure de renfort 13. Les organes de butée 21 et d'arrêt 22 sont, de préférence, légèrement obliques de manière à améliorer le contact entre eux. Les organes 21 et 22 ont pour but de limiter un éventuel déplacement relatif entre deux clins adjacents assemblés, l'organe 21 constituant également un guide lors de la pose du clin. Lorsque les lames 15 et 15' présentent des surfaces d'appui inclinées, il est possible d'éliminer l'organe de butée 21.

La constitution de la vêture permettant d'isoler thermiquement par l'extérieur toute la façade d'une paroi support nécessite toujours l'utilisation de plusieurs éléments de vêture identiques à celui représenté sur la figure 1, lesdits éléments de vêture étant fixés séparément sur la paroi support au moyen notamment d'éléments complets de fixation 8, 9 et reliés entre eux par les lames d'encliquetage 15 et 15'. Une lisse inférieure est posée en premier et sert de niveau à la vêture, puis les éléments de vêture sont posés et lorsque le dernier élément de vêture est fixé, on termine le revêtement de la façade par une lisse supérieure de manière à parfaire la protection de la vêture.

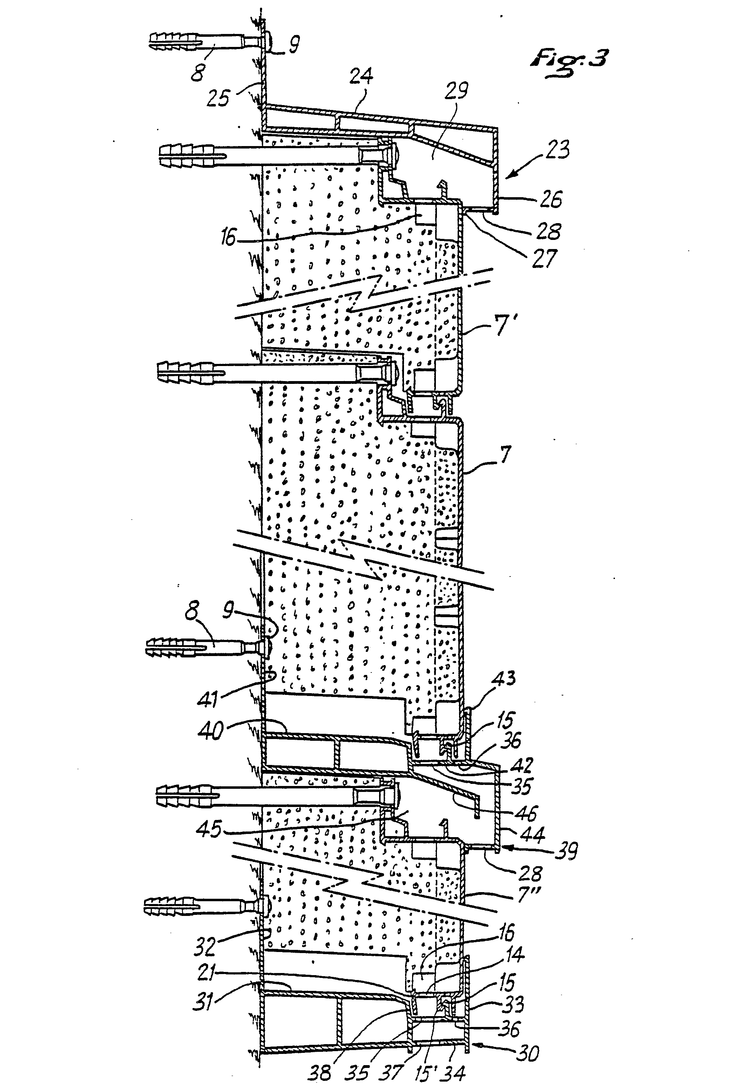

Selon la présente invention (figure 3), la lisse supérieure ou haute 23 est réalisée en une matière thermoplastique extrudée, telle que du polychlorure de vinyle, et elle est constituée par une nervure centrale creuse 24 et deux retours 25 et 26. Le retour 25 est dirigé vers le haut et il est fixé sur la paroi support 1 au moyen d'éléments de fixation appropriés, et notamment au moyen d'éléments complets de fixation 8, 9. Le retour 26 est dirigé vers le bas, donc en sens inverse du retour 25, et comprend un rebord 27 percé d'orifices oblongs 28 et en appui sur la bande centrale du clin supérieur. Grâce au fait que la lisse haute 23 coiffe légèrement ledit dernier clin, on assure ainsi la protection et l'aération du dernier élément supérieur de vêture 3, la ventilation s'effectuant par les canaux 16, l'espace interne 29 de la lisse 23 et à travers les orifices 28.

La lisse inférieure ou basse 30 est également en matière thermoplastique extrudée, et notamment en polychlorure de vinyle, et elle est constituée par une nervure de renfort centrale 31 et deux retours 32 et 33 dirigés dans le même sens. Le retour 32 est fixé sur la paroi support 1 par des éléments de fixation, et en particulier par des éléments complets de fixation 8, 9 tandis que le retour 33, légèrement élastique, vient en appui sur la bande centrale du premier clin inférieur. Sur une partie moins épaisse 34 de la nervure centrale 31 est prévue une lame d'encliquetage 15 coopérant avec la lame d'encliquetage 15' du clin adjacent, ainsi que des orifices d'aération 35 et d'évacuation 36 des condensats, l'aération et l'évacuation s'effectuant à travers des orifices 37. La nervure centrale 31 comprend également un rebord libre 38 constituant organe d'arrêt pour l'organe de butée 21 du clin adjacent.

Pour la pose verticale des éléments de vêture 3 ou pour le changement de pose horizontale/verticale, ou encore lors d'une pose horizontale pour apporter un effet de relief supplémentaire, ou enfin pour décaler des clins, éventuellement découpés, vis-à-vis d'ouvertures ménagées dans la paroi support 1, la présente invention apporte une solution originale à ces problèmes en utilisant une pièce intermédiaire 39 telle que représentée sur la figure 3.

La pièce intermédiaire 39 est la combinaison de la lisse haute 23 et de la lisse basse 30, et joue donc le rôle de lisse basse pour le clin adjacent 7 situé au-dessus de ladite pièce 39 et le rôle de lisse haute pour le clin adjacent 7″ situé au-dessous de ladite pièce 39. A cet effet, elle comprend une nervure de renfort 40 analogue à la nervure 31, un retour 41 analogue au retour 25 et fixé sur la paroi support 1, ladite fixation étant par exemple réalisée au moyen d'éléments complets de fixation 8,9, une partie moins épaisse 42 analogue à la partie 34 avec ses orifices d'aération 35 et d'évacuation des condensats 36 à l'exception des orifices 37 et sa lame d'encliquetage 15, un retour haut 43 analogue au retour 33 et en appui sur le clin 7, et un retour 44 analogue au retour 26 avec ses orifices d'aération 28. De plus, dans un espace 45 analogue à l'espace 29 et délimité par la rive supérieure du clin 7″ et le retour 44, il est prévu une bavette 46 solidaire de la nervure 40 et destinée à servir de guide d'évacuation pour les condensats vers les orifices 28.

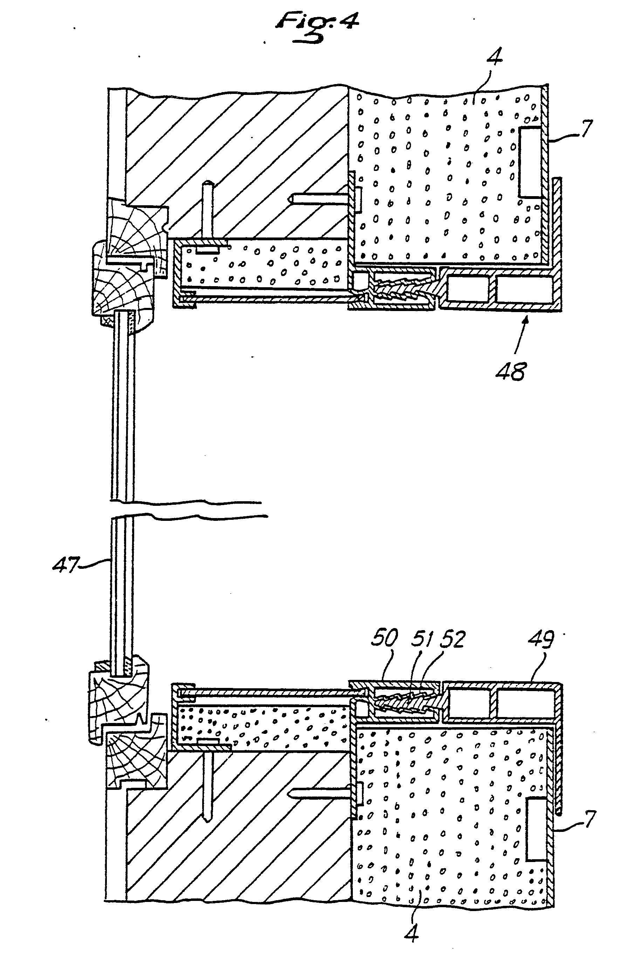

Pour des arrêts pignon sur façade et/ou au pourtour d'ouvertures 47, comme cela est représenté sur la figure 4, on utilise des équerres d'encadrement 48, réalisées en matière thermoplastique telle que du polychlorure de vinyle et constituées par des profilés en deux parties mâle 49 et femelle 50. La partie mâle 49 comprend une queue de sapin 51 qui permet la jonction et le verrouillage de ladite partie mâle dans la partie femelle 50 qui est munie d'un logement 52 approprié pour la réception de ladite queue de sapin 51. De telles équerres d'encadrement comportent également un préperçement et un relief d'arrêt d'eau qui permet de les utiliser en linteau.

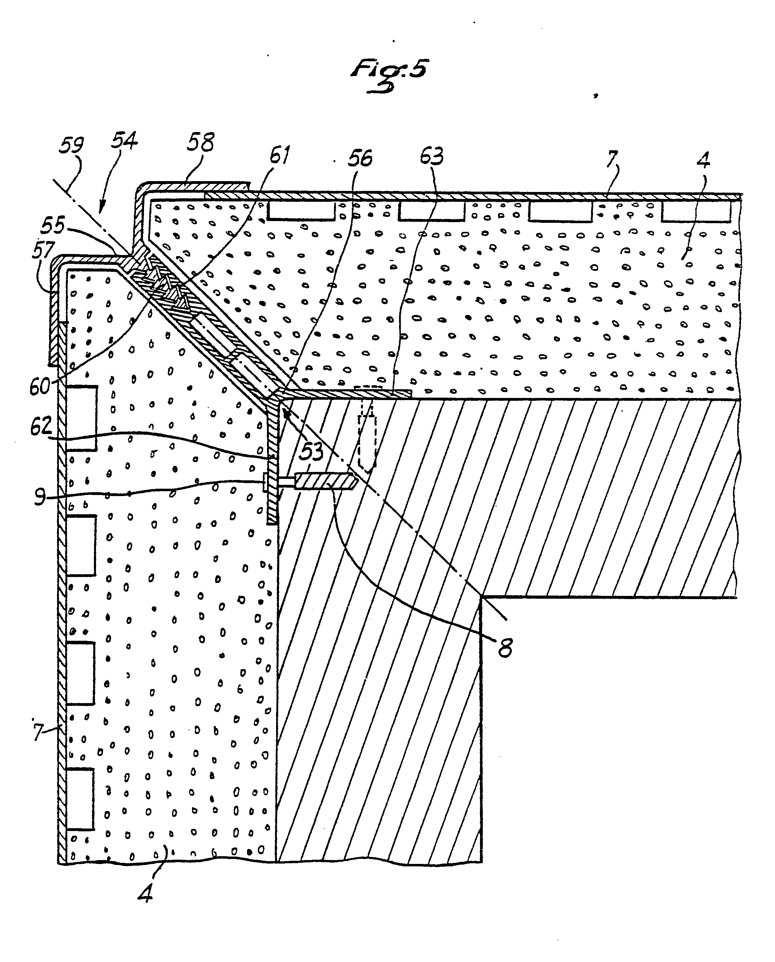

Lorsque la paroi support à isoler thermiquement par l'extérieur comprend un angle saillant ou rentrant tel que 53, représenté sur la figure 5, on utilise des pièces de jonction 54 d'un type analogue à celui connu en soi de la citation BE-A-688529.

Chaque pièce de jonction 54 est constituée en deux parties mâle 55 et femelle 56 ayant la forme de profilés en matière thermoplastique, et notamment en polychlorure de vinyle. La partie mâle 55 comprend deux retours 57 et 58 situés dans des directions perpendiculaires et, dans l'axe de symétrie 59 de la partie mâle 55, une queue de sapin 60 se verrouillant par enfoncement dans un logement approprié 61 ménagé dans la partie femelle 56, cette dernière comportant également deux retours perpendiculaires 62 et 63 fixés sur la paroi support par des éléments de fixation appropriés, et notamment par des éléments complets de fixation 8,9. Dans le cas d'un angle saillant 53, l'axe de symétrie 59 est confondu avec la bissectrice intérieure de l'angle 53, et c'est la partie femelle 56 qui est fixée sur la paroi support, la partie mâle 55 prenant appui sur les clins adjacents de la vêture. Dans le cas d'un angle rentrant, on procède de façon inverse, c'est-à-dire que c'est la partie mâle 55 qui serait fixée sur la paroi support tandis que la partie femelle 56 viendrait en appui sur les clins adjacents.

Dans tout ce qui précède, on a fait référence à des clins 7, 7' et 7'' sans préciser l'état de surface de leur face extérieure. De par leur fonction et leur positionnement les clins participent en fait à l'esthétique des bâtiments protégés par les vêtures décrites à l'appui des figures 1 à 5. Dès lors, la tendance actuelle est de conférer aux clins un aspect extérieur variable et agréable. Pour réaliser un clin présentant un aspect grainé, notamment un aspect d'enduit traditionnel, on peut utiliser avantageusement l'appareillage de grainage objet d'une demande de brevet européen divisionnaire.

**Revendications**

1. Elément de revêtement pour façade extérieure d'une paroi, réalisé par extrusion d'une matière thermoplastique, notamment polychlorure de vinyle, et comportant une bande centrale (10), bordée sur chaque côté latéral par un retour (11, 12), des moyens de liaison consistant en une lame d'encliquetage (15) disposée sur l'un des retours (11) et un organe d'encliquetage (15') disposé sur l'autre retour (12), la lame d'encliquetage (15) de l'élément étant susceptible de coopérer avec l'organe d'encliquetage (15') d'un élément adjacent pour assurer une liaison desdits éléments par verrouillage, et des moyens (13) permettant la fixation rigide de l'élément de revêtement à la paroi (1) servant de support audit élément de revêtement, caractérisé en ce que l'organe d'encliquetage (15') consiste en une lame d'encliquetage ayant une forme complémentaire de la lame d'encliquetage (15) placée sur l'autre retour, lesdites lames d'encliquetage (15, 15') étant dirigées vers l'extérieur des retours (11, 12) et étant dans des plans sensiblement parallèles, et en ce que sur chacun des retours (11 et 12) est ménagée au moins une série d'orifices (14, 17).

2. Elément suivant la revendication 1, caractérisé en ce que sur l'un des retours (12), sont ménagées deux séries d'orifices (14, 17) et en ce que la lame d'encliquetage (15') présente sur ce retour est disposée entre les deux séries d'orifices (14, 17).

3. Elément suivant la revendication 2, caractérisé en ce que l'autre retour (11) présente une seule série d'orifices (14) et que la lame d'encliquetage (15) prévue sur cet autre retour (11) se trouve disposée entre la série d'orifices (14) et le plan de la bande centrale (10) de l'élément.

4. Elément suivant la revendication 3, caractérisé en ce que les orifices (14, 17) de chaque série d'orifices sont oblongs et en ce que les orifices des séries d'orifices (14) (14) séparées du plan de la bande centrale (10) de l'élément par la lame d'encliquetage (15, 15') sont affectés à l'aération de l'espace délimité par ledit élément et ladite paroi, tandis que les orifices de la série d'orifices (17) située entre la lame d'encliquetage (15, 15') et le plan de la bande centrale (10) de l'élément sont affectés à l'évacuation des produits de condensation susceptibles de se former dans ledit espace, les dimensions des orifices d'aération (14) sur les deux retours (11, 12) étant de préférence les mêmes et étant différentes des dimensions des orifices d'évacuation (17).

5. Elément suivant l'une des revendications 1 à 4, caractérisé en ce que sur un des retours (12) est prévu un organe de butée (21) tandis que sur le retour opposé (11) est ménagé un organe d'arrêt (22) de façon que, lorsque deux éléments adjacents sont reliés entre eux, ledit organe de butée (21) vienne en appui sur ledit organe d'arrêt (22).

6. Elément suivant la revendication 5, caractérisé en ce que l'organe d'arrêt (22) est constitué par une partie d'une nervure de renfort (13), ladite nervure comportant une série d'orifices pour des moyens de fixation dudit élément sur ladite paroi (1).

7. Elément suivant l'une des revendications 4 à 6, caractérisé en ce que les orifices d'évacuation (17) des produits de condensation sont ménagés entre la lame d'encliquetage (15') et une languette (18) solidaire du retour (12) et dont la hauteur est telle que lorsque deux éléments adjacents sont reliés, un passage (20) est ménagé entre le bord libre (19) de ladite languette (18) et l'élément adjacent.

8. Elément suivant l'une des revendications 1 à 7, caractérisé en ce que les plans des lames d'encliquetage (15, 15') présentes sur les retours (11, 12) sont parallèles au plan de la bande centrale (10) de l'élément.

9. Elément suivant l'une des revendications 1 à 8, caractérisé en ce que la face extérieure de la bande centrale (10) est grainée.

10. Vêture pour façade extérieure de bâtiment du type comprenant une âme isolante (4), ou isolant, incorporée à un clin extérieur (7), ledit isolant étant en un matériau isolant rigide et comportant des plots (6) en relief disposés en quinconce, répartis régulièrement sur toute la face extérieure (5) dudit isolant (4), caractérisée en ce que ledit clin extérieur (7) est constitué par l'élément de revêtement suivant l'une des revendications 1 à 9, et en ce que lesdits plots (6) sont de forme carrée, à bords arrondis, et sont disposés de manière à présenter une diagonale sensiblement parallèle à l'axe longitudinal de l'âme isolante (4).

11. Vêture suivant la revendication 10, caractérisée en ce que des canaux d'aération (16) sont ménagés dans l'isolant et disposés de façon à pouvoir être au moins en partie en regard des orifices d'aération (14) du clin (7) et permettre ainsi la communication entre lesdits orifices et l'espace entre les plots (6).

12. Vêture suivant la revendication 10 ou 11, caractérisée en ce que la partie supérieure est protégée par une lisse haute (23), réalisée en une matière thermoplastique extrudée et constituée par une nervure centrale (24) coiffant le retour supérieur (11) du clin (7') d'une part, et par deux retours (25, 26) de directions opposées d'autre part, un premier (25) des retours étant fixé sur la façade extérieure (1) du bâtiment, tandis que le deuxième retour (26) déborde légèrement sur la bande centrale (10) du clin (7') tout en prenant appui sur ce dernier, ledit deuxième retour (26) comportant au moins une série d'orifices (28) d'aération.

13. Vêture suivant l'une des revendications 10 ou 11, caractérisée en ce que la partie inférieure est protégée par une lisse basse (30) réalisée en une matière thermoplastique extrudée et constituée par une nervure de renfort (31) centrale et par deux retours (32, 33) disposés dans la même direction, un premier (32) desdits retours étant fixé sur la façade extérieure (1) du bâtiment, tandis que le deuxième retour (33) est légèrement élastique et en appui par son extrémité libre sur la bande centrale (10) du clin inférieur (7''), en ce qu'au moins une lame d'encliquetage (15) est prévue sur ladite nervure centrale (31) de manière à coopérer avec la lame d'encliquetage (15') inférieure dudit clin (7''), en ce que des orifices d'aération (35) et d'évacuation (36) des condensats sont ménagés dans ladite nervure centrale (31) en regard des orifices correspondants (14, 17) dudit clin (7''), et en ce qu'une partie de ladite nervure centrale (31) constitue un organe d'arrêt (38) pour l'organe de butée (21) dudit clin (7'').

14. Vêture suivant la revendication 10 ou 11, caractérisée en ce que les lisses haute (23) et basse (30) des revendications 12 et 13 sont combinées ensemble pour constituer une pièce intermédiaire (39) jouant le rôle d'une lisse basse pour un clin (7) situé au-dessus et celui d'une lisse haute pour un clin (7'') situé en-dessous, et en ce que la nervure centrale (40) est prolongée vers le bas par une bavette (46) de réception et de guidage des condensats.

15. Vêture suivant la revendication 10 ou 11, caractérisée en ce qu'elle comprend au moins une équerre d'encadrement (48) coiffant le chant transversal de la vêture ou le chant longitudinal laissé apparent en coupant longitudinalement la vêture, cette équerre d'encadrement étant constituée d'un profilé mâle (49) en L, dont une branche comporte une queue de sapin (51) et l'autre s'appuie sur la bande centrale du clin (7) et d'un profilé femelle (50) également en L, dont une branche présente un logement (52) pour ladite queue de sapin (51) et l'autre comporte des moyens permettant la fixation du profilé femelle à la paroi supportant la vêture.

16. Vêture suivant l'une des revendications 10 ou 11, caractérisée en ce qu'elle comprend au moins une pièce de jonction (54) des vêtures portées par deux parois supports formant un angle droit rentrant ou saillant (53), ladite pièce de jonction (54) étant constituée d'un profilé mâle (55) comportant deux retours perpendiculaires (57, 58) et une queue de sapin (60) prévue le long de la bissectrice intérieure de l'angle droit formé par lesdits retours, et d'un profilé femelle (56) comportant deux retours perpendiculaires (62, 63) et un logement (61) dans lequel s'emboîte la queue de sapin (60), ledit logement étant ménagé dans un corps externe et dont l'axe est situé sur la bissectrice extérieure de l'angle formé par les retours (62, 63) perpendiculaires dudit profilé femelle (56), les retours de l'un des profilés, à savoir les retours (57, 58) du profilé mâle (55) dans le cas d'un angle rentrant ou retours (62, 63) du profilé femelle (56) dans le cas d'un angle saillant, étant fixés aux parois supports de vêture pour couvrir l'angle formé par ces parois tandis que chacun des retours de l'autre profilé s'appuie sur le clin (7) de la vêture portée par l'une des parois supports formant angle droit et délimite, avec le retour en regard de l'autre profilé et le corps externe du profilé femelle, un espace dans lequel est maintenue la partie extrême de la vêture portée par ladite paroi.

## Claims

1. Covering element for the exterior facade of a wall produced by extrusion of a thermoplastics material, in particular polyvinyl choride, and comprising a central strip (10) bordered on each lateral edge by a return (11, 12), connecting means consisting of a locking blade (15) disposed on one of the returns (11) and a locking member (15') disposed on the other return (12), the locking blade (15) of the element being adapted to cooperate with the locking means (15') of an adjacent element to ensure a connection of the said elements by locking, and means (13) permitting of rigid fixing of the covering element to the wall (1) serving as a support for the said covering element, characterised in that the locking means (15') consists of a locking blade having a form which matches that of the locking blade (15) located on the other return, the said locking blades (15, 15') being directed towards the outside of the returns (11, 12) and being in substantially parallel planes, and in that there is on each of the returns (11 and 12) at least one series of orifices (14, 17).

2. Element according to Claim 1, characterised in that there are on one of the returns (12) two series of orifices (14, 17) and in that the locking blade (15') which is provided on this return is disposed between the two series of orifices (14, 17).

3. Element according to Claim 2, characterised in that the other return (11) has a single series of orifices (14) and in that the locking blade (15) provided on this other return (11) is disposed between the series of orifices (14) and the plane of the central strip (10) of the element.

4. Element according to Claim 3, characterised in that the orifices (14, 17) of each series of orifices are oblong and in that the orifices of the series of orifices (14) being separated from the plane of the central strip (10) of the element by the locking blade (15, 15') are allocated to aeration of the space bounded by the said element and the said wall, while the orifices of the series of orifices (17) situated between the locking blade (15, 15') and the plane of the central strip (10) of the element are used for the evacuation of condensation products likely to form in the said space, the dimensions of the aeration orifices (14) on the two returns (11, 12) being preferably the same and being different from the dimensions of the evacuation orifices (17).

5. Element according to one of Claims 1 to 4, characterised in that on one of the returns (12) there is an abutment member (21) while on the opposite return (11) there is a stop member (22) so that when two adjacent elements are connected to each other, the said abutment member (21) bears on the said stop member (22).

6. Element according to Claim 5, characterised in that the stop member (22) is constituted by a part of a reinforcing rib (13), the said rib comprising a series of orifices for means of fixing the said element on the said wall (1).

7. Element according to one of Claims 4 to 6, characterised in that the orifices (17) for evacuating products of condensation are disposed between the locking blade (15') and a tongue (18) rigid with the return (12) and the height of which is such that when two adjacent elements are connected a passage (20) is created between the free edge (19) of the said tongue (18) and the adjacent element.

8. Element according to one of Claims 1 to 7, characterised in that the planes of the locking blades (15, 15') present on the returns (11, 12) are parallel with the plane of the central strip (10) of the element.

9. Element according to one of Claims 1 to 8, characterised in that the outer face of the central strip (10) is grained.

10. Covering for the exterior facade of a building of the type comprising an insulating core (4) or insulant incorporated into an outer covering (7), the said insulant being of a rigid insulating material and comprising relief studs (6) disposed in a staggered arrangement and distributed regularly over the entire outer surface (5) of the said insulant (4), characterised in that the said outer covering (7) consists of the covering element according to one of Claims 1 to 9 and in that the said studs (6) are of a square shape having rounded edges and are disposed in such a way as to have a diagonal substantially parallel with the longitudinal axis of the insulating core (4).

11. Covering according to Claim 10, characterised in that aeration passages (16) are provided in the insulant and are so disposed that they can be at least partially opposite aeration orifices (14) in the covering (7), so allowing communication between the said orifices and the space between the studs (6).

12. Covering according to Claim 10 or 11, characterised in that the upper part is protected by a smooth top (23) made from an extruded thermoplastics material and constituted by a central rib (24) which straddles the top return (11) of the covering (7') on the one hand and by two returns (25, 26) in opposite directions on the other, a first (25) of the returns being fixed on the outer facade (1) of the building, while the second return (26) projects slightly beyond the central strip (10) of the covering (7') while bearing on the latter, the said second return (26) comprising at least one series of aerating orifices (28).

13. Covering according to one of Claims 10 or 11, characterised in that the lower part is protected by a smooth bottom (30) made from an extruded thermoplastics material and constituted by a central reinforcing rib (31) and by two returns (32, 33) disposed in the same direction, a first (32) of the said returns being fixed on the outer facade (1) of the building while the second return (33) is slightly flexible and has its free end bearing on the central strip (10) of the bottom covering (7"), in that at least one locking blade (15) is provided on the said central rib (31) in such a way as to cooperate with the bottom locking blade (15') of the said covering (7"), in that aeration orifices (35) and condensate evacuating orifices (36) are disposed in the said central rib (31) opposite corresponding orifices (14, 17) in the said covering (7") and in that a part of the said central rib (31) constitutes a stop member (38) for the abutment member (31) of the said covering (7").

14. Covering according to Claim 10 or 11, characterised in that the smooth top (23) and bottom (30) according to Claims 12 and 13 are combined together to constitute an intermediate member (39) which plays the part of a smooth bottom for a covering (7) situated above and that of a smooth top for a covering (7") situated below and in that the central rib (40) is extended downwardly by a drip flap (46) for receiving and guiding condensate.

15. Covering according to Claims 10 or 11, characterised in that it comprises at least one framing angle member (48) straddling the transverse edge of the covering or the longitudinal edge left visible by cutting longitudinally through the covering, this framing angle member consisting of a male L-shaped section (49), of which one arm comprises a fir tree-shaped tail (51) while the other bears on the central strip of the covering (7) and a female likewise L-shaped section (50), of which one arm comprises a housing (52) for the said fir tree-shaped tail (51) while the other comprises means by which it is possible to fix the female section to the wall carrying the covering.

16. Covering according to one of Claims 10 or 11, characterised in that it comprises at least one member (54) for connecting coverings carried by two support walls forming a right-angle inwardly or outwardly (53), the said junction piece (54) consisting of a male section (55) comprising two perpendicular returns (57, 58) and a fir tree-shaped tail (60) provided along the inner bisectrix of the right-angle formed by the said returns, and a female section (56) comprising two perpendicular returns (62, 63) and a housing (61) in which fits the fir tree-shaped tail (60), the said housing being disposed in an outer body and the axis of which is situated on the outer bisectrix of the angle formed by the perpendicular return (62, 63) of the said female section (56), the returns of one of the sections, viz. the returns (57, 58) of the male section (55) in the case of a re-entering angle or returns (62, 63) on the female section (56) in the case of a projecting angle, being fixed to the walls supporting the covering,. in order to cover the angle formed by these walls while each of the returns of the other section bears on the covering (7) of the covering carried by one of the support walls forming a right-angle and bounding, with the return opposite the other section and the outer body of the female section, a space in which is held the extreme part of the covering carried by the sais walls.

## Patentansprüche

1. Verkleidungselement für die Außenfassade einer Wand, das durch Extrudieren eines thermoplastischen Stoffes, insbesondere Polyvinylchlorid, hergestellt wurde und einen mittleren Streifen (10), der auf jeder Seite lateral durch ein Winkelstück (11, 12) begrenzt ist, Mittel zur Verbindung, die aus einer Klinkensperre (15), die an dem einen Winkelstück (1) angeordnet ist, und einem Sperrorgan (15') bestehen,. das an dem anderen Winkelstück (12) angeordnet ist, wobei die Klinkensperre (15) des Elements befähigt ist, mit dem Sperrorgan (15') eines angrenzenden Elements zusammenzuwirken, um eine Verbindung zwischen diesen Elementen durch Verriegelung zu gewährleisten, und Mittel (13) umfaßt, die eine starre Fixierung des Verkleidungselements mit dem Verkleidungselement als Unterlage dienenden Wand (1) ermöglichen, dadurch gekennzeichnet, daß das Sperrorgan (15') aus einer Klinkensperre besteht, die eine komplementäre Form zur Klinkensperre (15) aufweist, die an dem anderen Winkelstück angeordnet ist, wobei die Klinkensperren (15, 15') gegen die Außenfläche der Winkelstücke (11, 12) gerichtet sind und in annähernd parallelen Ebenen angeordnet sind, und daß auf jeder der Winkelstücke (11, 12) wenigstens eine Reihe von Öffnungen (14, 17) vorgesehen ist.

2. Element nach Anspruch 1, dadurch gekennzeichnet, daß auf einem der Winkelstücke (12) zwei Reihen von Öffnungen (14, 17) vorgesehen sind und die Klinkensperre (15') auf diesem Winkelstück zwischen den beiden Reihen von Öffnungen (14, 17) angeordnet ist.

3. Element nach Anspruch 2, dadurch gekennzeichnet, daß das andere Winkelstück (11) eine einzige Reihe von Öffnungen (14) aufweist und die auf dem anderen Winkelstück (11) vorgesehene Klinkensperre (15) zwischen der Reihe von Öffnungen (14) und der Fläche des mittleren Streifens (10) des Elements angeordnet ist.

4. Element nach Anspruch 3, dadurch gekennzeichnet, daß die Öffnungen (14, 17) jeder Reihe von Öffnungen länglich sind und die Öffnungen der Reihen von Öffnungen (14), die von der Fläche des mittleren Streifens (10) des Elements durch die Klinkensperre (15, 15') getrennt sind, bestimmt sind für die Belüftung des durch das Element und die Wand begrenzten Raums, während die Öffnungen der Reihe von Öffnungen (17), die zwischen der Klinkensperre (15, 15') und der Fläche des mittleren Streifens (10) des Elements angeordnet ist, für die Ableitung der Kondensationsprodukte, die sich in diesem Raum bilden können, gedacht sind, wobei die Abmessungen der Belüftungsöffnungen (14) auf den beiden Winkelstücken (11, 12) vorzugsweise dieselben sind und sich von den Abmessungen der Ableitungsöffnungen (17) unterscheiden.

5. Element nach einem der Ansprüche 1 bis 4, dadurch gekennzeichnet, daß auf einem der Winkelstücke (12) ein Anschlag (21) vorgesehen ist, während auf dem gegenüberliegenden Winkelstück (11) ein Sperrorgan (22) vorgesehen ist, so daß, sobald zwei angrenzende Elemente miteinander verbunden werden, sich der Anschlag (21) auf dem Sperrorgan (22) abstützt.

6. Element nach Anspruch 5, dadurch gekennzeichnet, daß das Sperrorgan (22) aus einem Teil einer Verstärkungsrippe (13) gebildet ist, die eine Reihe von Öffnungen für die Mittel zur Fixierung des Elements auf der Wand (1) umfaßt.

7. Element nach einem der Ansprüche 4 bis 6, dadurch gekennzeichnet, daß die Ableitungsöffnungen (17) für die Ableitung der Kondensationsprodukte zwischen der Klinkensperre (15') und einem festverbundenen Zapfen (18) des Winkelstücks (12) angeordnet sind und deren Höhe so bemessen ist, daß sich bei Verbindung zweier angrenzender Elemente zwischen dem freien Rand (19) des Zapfens (18) und dem angrenzenden Element ein Durchgang bildet.

8. Element nach einem der Ansprüche 1 bis 7, dadurch gekennzeichnet, daß die Flächen der Klinkensperren (15, 15') auf den Winkelstücken (11, 12) zur Ebene des mittleren Streifens (10) parallel verlaufen.

9. Element nach einem der Ansprüche 1 bis 8, dadurch gekennzeichnet, daß die Außenfläche des mittleren Streifens (10) genarbt ist.

10. Verkleidung für die Außenfassade eines Gebäudes, die eine Isolierschicht (4), die an einen äußeren Überlappungsstoß (7) anschließt, wobei diese Isolierschicht aus einem starren Isoliermaterial besteht und schachbrettartig angeordnete reliefartige Strukturen (6) aufweist, die regelmäßig über die gesamte Außenfläche (5) des Isoliermaterials (4) verteilt sind, dadurch gekennzeichnet, daß der äußere Überlappungsstoß (7) aus dem Verkleidungselement nach einem der Ansprüche 1 bis 9 besteht und die Strukturen (6) quadratische Form aufweisen, abgerundete Ränder haben und so angeordnet sind, daß sie eine Diagonale bilden, die in etwa parallel zur Längsachse der Isolierschicht (4) verläuft.

11. Verkleidung nach Anspruch 10, dadurch gekennzeichnet daß die Belüftungskanäle (16) in der Isolierschicht angeordnet sind und so verlaufen, daß sie wenigstens teilweise den Belüftungsöffnungen (14) des Überlappungsstoßes (7) gegenüberliegen und auf diese Weise die Verbindung zwischen diesen Öffnungen und dem Raum zwischen den Strukturen (6) ermöglichen.

12. Verkleidung nach Anspruch 10 oder 11, dadurch gekennzeichnet, daß der obere Teil durch eine hohe Leiste (23) geschützt ist, die aus extrudiertem thermoplastischem Material hergestellt ist und einerseits aus einer Mittelrippe (24), welche das obere Winkelstück (11) des Überlappungsstoßes (7') abdeckt, besteht und andererseits aus zwei Winkelstücken (25, 26) in entgegengesetzter Richtung, wobei ein erstes Winkelstück (25) auf der Außenfassade (1) des Gebäudes fixiert ist, während das zweite Winkelstück (26) leicht über den mittleren Streifen (10) des Überlappungsstoßes (7') hinausragt und sich auf diesem zur Gänze abstützt, wobei das zweite Winkelstück (26) wenigstens eine Reihe von Belüftungsöffnungen (28) aufweist.

13. Verkleidung nach einem der Ansprüche 10 oder 11, dadurch gekennzeichnet, daß der untere Teil durch eine untere Leiste (30) geschützt ist, die aus einem extrudierten thermoplastischen Material hergestellt ist und aus einer mittleren Verstärkungsrippe (31) und zwei Winkelstücken (32, 33) besteht, die in dieselbe Richtung verlaufen, wobei ein erstes Winkelstück (32) auf der Außenfassade (1) des Gebäudes befestigt ist, während das zweite Winkelstück (33) leicht elastisch ist und sich mit seinem freien Ende auf den mittleren Streifen (10) des unteren Überlappungsstoßes (7") abstützt, daß wenigstens eine Klinkensperre (15) auf der Mittelrippe (31) so angeordnet ist, daß sie mit der unteren Klinkensperre (15') des Überlappungsstoßes (7") zusammenwirkt, daß die Belüftungsöffnung (35) und die Öffnungen für die Ableitung (36) der Kondensate in der mittleren Rippe (31) gegenüber den entsprechenden Öffnungen (14, 17) des Überlappungsstoßes (7") angeordnet sind und daß ein Teil der mittleren Rippe (31) ein Sperrorgan (38) für den Anschlag (21) des Überlappungsstoßes (7") bildet.

14. Verkleidung nach Anspruch 10 oder 11, dadurch gekennzeichnet, daß die obere Leiste (23) und die untere Leiste (30) nach Anspruch 12 und 13 miteinander so verbunden sind, daß sie ein Zwischenstück (39) bilden, das die Rolle einer unteren Leiste für einen oberhalb angeordneten Überlappungsstoß (7) spielt, sowie die einer oberen Leiste für einen unterhalb angeordneten Überlappungsstoß (7"), und daß die Mittelrippe (40) nach unten zu durch einen Abstreifer (46) zur Aufnahme und Führung des Kondensats verlängert ist.

15. Verkleidung nach Anspruch 10 oder 11, dadurch gekennzeichnet, daß sie wenigstens eine Winkeleinfassung (48) aufweist, welche die Querrippe der Verkleidung abdeckt oder die offenliegende Längsrippe abdeckt und dadurch die Verkleidung in der Längsrichtung abschneidet, wobei diese Winkeleinfassung aus einem umfaßten Profilstück (49) besteht, wobei ein Schenkel dieses Profilstücks ein tannenbaumförmiges Endstück (51) trägt und der andere sich auf dem mittleren Streifen des Überlappungsstoßes (7) abstützt, und aus einem umfassenden Profilstück (50), wobei ein Schenkel einen Sitz (52) für das tannenbaumförmige Endstück (51) bildet und der andere Schenkel Mittel trägt, welche die Fixierung des umfassenden Profilstücks in der Wand, welche die Verkleidung trägt, ermöglicht.

16. Verkleidung nach einem der Ansprüche 10 oder 11, dadurch gekennzeichnet, daß sie wenigstens ein Stück zur Verbindung (54) der von zwei Stützwänden getragenen Verkleidungen aufweist, wobei diese Wände einen ein- oder vorspringenden rechten Winkel (53) bilden, das Verbindungsstück (54) aus einem umfaßten Profilstück (55) besteht, das zwei senkrechte Winkelstücke (57, 58) und ein tannenbaumförmiges Endstück (60) umfaßt, das entlang der inneren Winkelhalbierenden des rechten Winkels vorgesehen ist, der durch die Winkelstücke gebildet wird, und einem umfassenden Profilstück (56), das zwei senkrechte Winkelstücke (62, 63) und einen Sitz (61) umfaßt, in den sich das tannenbaumförmige Endstück (60) fügt, wobei der Sitz in einem Außenkörper angeordnet ist und dessen Achse auf der äußeren Winkelhalbierenden des Winkels angeordnet ist, der durch die senkrechten Winkelstücke (62, 63) des umfassenden Profilstücks (56) gebildet wird, wobei die Winkelstücke eines der Profilstücke, d. h. die Winkelstücke (57, 58) des umfaßten Profilstücks (55) im Falle eines einspringenden Winkels oder die Winkelstücke (62, 63) des umfassenden Profilstücks (56) im Falle eines vorspringenden Winkels an den Stützwänden der Verkleidung fixiert sind, um den durch diese Wände gebildeten Winkel abzudecken, während jedes der Winkelstücke des anderen Profilstücks sich auf dem Überlappungsstoß (7) der Verkleidung abstützt, die von einer der beiden Stützwände getragen wird, die miteinander einen rechten Winkel bilden, und mit dem Winkelstück gegenüber dem anderen Profilstück und dem Außenkörper des umfassenden Profilstücks einen Raum abgrenzt, in dem der Außenteil der Verkleidung, die von der Wand getragen wird, gehalten wird.

Fig. 1

Fig. 2

16

6

5

4

16

0 136 324

Fig. 3

*Fig.4*

## Fig.5